# EUROPEAN PATENT APPLICATION

(11) **EP 2 260 817 A2**
(43) Date of publication of application: **15.12.2010**
(21) Application number: 10382158.3
(22) Date of filing: 02.06.2010
(51) Int. Cl.: A61G 3/06

(54) **Concealable ramp for access to public transport vehicles**

(30) Priority: 10.06.2009 ES 200901400
(71) Applicant: Masats, S.A., 08253 Sant Salvador De Guardiola (ES)
(72) Inventor: Puig Tomas, Roger, 08279, Avinyo (ES); Pujol Olleer, Jordi, 08251, Santpedor (ES)
(74) Representative: Sugrañes Patentes y Marcas

(57) **Abstract**

The present invention relates to a concealable ramp for access to public transport vehicles. The ramp of the invention for being assembled in the floor of a door of a vehicle is capable of adopting two end positions, a first rest position, the ramp being folded and a second operative position, being extended in a slanted plane from the floor to the surface of the ground. The ramp is formed by two platforms which are laterally and telescopically coupled by means of an assembly of guides and bearings, such that in the first position they are superimposed inside a box integral with the floor, the upper base of the box forming part of the floor itself, and such that in the second position both platforms protrude from the box in a slanted plane outside the vehicle and the upper platform rests in an articulated manner at the ends of its rear edge on the side guides of the box, the lower platform being arranged in a coplanar manner with respect to the upper platform.

## Description

### Technical Field of the Invention

The present invention relates to a concealable ramp for access to vehicles, particularly to public transport vehicles, suitable for being assembled in the floor of a door of the vehicle and capable of adopting two end positions, a first rest position, in which the ramp is folded in the vehicle, and a second operative position, in which the ramp is extended in a slanted plane from the floor of the vehicle to the surface of the ground on which the vehicle is located.

### Background of the Invention

Most public transport vehicles such as buses are currently equipped with automatically concealable or foldaway ramps to facilitate the access to said vehicles for people in wheelchairs, baby carriages, people with reduced mobility, shopping trolleys, etc.

Thus, there are known ramps the structure of which is assembled under the chassis of a public transport vehicle having a low floor in order to cover the vertical distance between the floor and the ground or the bus stop platform, if any. The placement of ramps of this type makes the mechanisms causing the unfolding and withdrawal of the ramp deteriorate over time since they are exposed to the dirt and particles which are usually swept up by the bottom part of the chassis of the vehicle.

Patent EP1166739 discloses a foldaway ramp comprising a supporting structure embedded within a recess located under the floor of a vehicle, a platform displaceable between a retracted position and an extracted position with respect to the supporting structure, parallel to the floor of the vehicle, electric actuator control means for moving said platform between the two positions and cam means for controlling the slant of said platform during the final phase of the displacement towards the extracted position, from a position parallel to said floor to a downwardly slanted position, in which the front edge of the platform rests on the ground, and the return to said retracted position by effect respectively of raising and lowering the rear side of said platform operated by said cam means. The mentioned cam means include upwardly slanted sliding surfaces located near the front edge of the supporting structure and having an arched profile, complementary elements having an arched shape with respect to the arched profile of the sliding surfaces, articulated to the rear edge of the platform and cooperating with said sliding surfaces by friction contact. The mentioned sliding surfaces and the complementary elements are located at the height of the ends of the front side of the supporting structure and of the rear side of said platform, respectively.

Since the ramp and its mechanisms are arranged in a recess integrated in the floor of the vehicle to protect it from external agents, the length thereof is conditioned to the available inner space and for this reason, most of the ramps of this type formed by a platform housed inside the floor are highly slanted when the end thereof rests on the ground in the extracted position.

For the purpose of having a longer ramp and thus facilitating the access thereto, several known ramps are formed by two platforms. For example, document EP1704070-A2 describes a foldable ramp for use in the floor of a vehicle, comprising: a power source, a base, a first platform proximal the base and a second platform distal the base, a top and a bottom surface being distinguished in each of the platforms in an unfolded position, a linking device operatively connecting the first platform to the power source and provided with a fold facilitating arm, comprising a cable, connected to the second platform. During folding, the mentioned arm causes the second platform to pivot with respect to the first platform, and in the folded configuration the bottom surface of the first platform faces the bottom surface of the second platform and is parallel to the floor of the vehicle, the top surface of the second platform being coplanar with said floor.

Another solution for achieving gentler slopes in the ramp is the one proposed in document EP1107720-A1, in which the ramp comprises a first platform capable of sloping downwards forming part of the actual floor of the vehicle, a second platform extensible and retractable with respect to the first platform beyond the end thereof, and fluid pressure force actuating means suitable for causing, under fluid pressure, the second platform to extend or retract along a first line of action, the actuating means being arranged to act along a second line of action which is transverse to the first line of action.

Having solved the problem of the high slope, it would be desirable for the users located inside the bus not to be surprised by the movement of a part of the floor when the ramp is being unfolded and also to minimize the time used in the operations of unfolding and folding the ramp.

### Disclosure of the Invention

The concealable ramp for access to vehicles object of the present invention eliminates all the mentioned drawbacks and at the same time presents an assembly solution which is easier and quicker and more comfortable to operate.

The ramp in question is essentially **characterized in that** it is formed by two platforms which are laterally and telescopically coupled by means of an assembly of guides and bearings. In the first rest position both platforms are superimposed inside a box integral with the floor of the vehicle, such that the upper base of the box forms part of the floor itself, while in the second operative position both platforms protrude from the box in a slanted plane outside the vehicle and the upper one rests, in an articulated manner, at the ends of its rear edge on the side guides of the box, in the door of the vehicle in which the ramp is assembled, whereas the lower platform is arranged in a coplanar manner with respect to the upper platform, with its rear edge juxtaposed to the front edge of the upper platform and with its front edge resting on the ground. The assembly of both platforms is provided with drive means longitudinally arranged in the platforms and suitable for providing them with respective alternate folding and unfolding movements.

According to another feature of the invention, the drive means comprise at least one first drive chain, assembled in a frame integral with the box of the ramp and associated with the upper platform; at least one second drive chain, associated with the lower platform and with the upper platform; and a single drive motor capable of operating the first drive chain, all of this arranged such that, when the two platforms of the ramp are introduced in the box in the rest position of the ramp, upon starting the drive motor both of them come out of the box simultaneously, the lower one being displaced at twice the speed of the upper one until both of them reach their position of outward maximum extension from the box, such that both platforms are arranged in a coplanar manner upon reaching said point of maximum extension.

According to another feature of the invention, the first drive chain is linked to a drive bridge, integral with the upper platform, and to the shaft of the rear pulley of the second drive chain.

According to another feature of the invention, the second drive chain is fixed at one of its points to a point of the box of the ramp and at another of its points to a point of the lower platform.

According to another feature of the invention, the second drive chain is formed by a cable inextensible under traction.

### Brief Description of the Drawings

The attached drawings show, by way of a non-limiting example, an embodiment of the concealable ramp for access to vehicles object of the present invention. In said drawings,

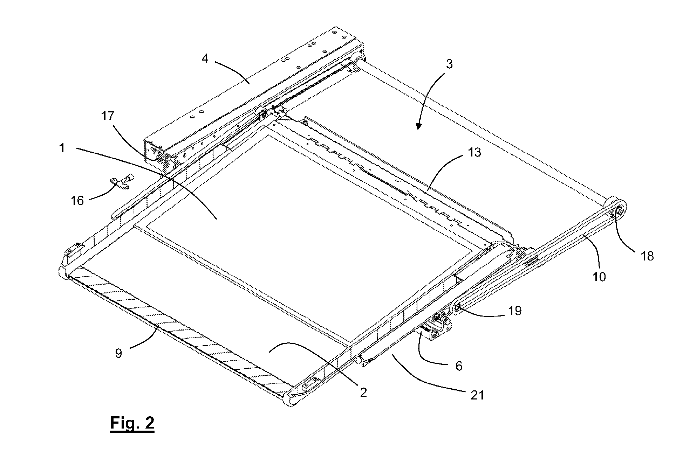

Figures 1, 2 and 3 are respective perspective top views of the concealable ramp according to the invention, in a folded position, in medium extension and in total extension, respectively, with parts removed in order to better see the different components;

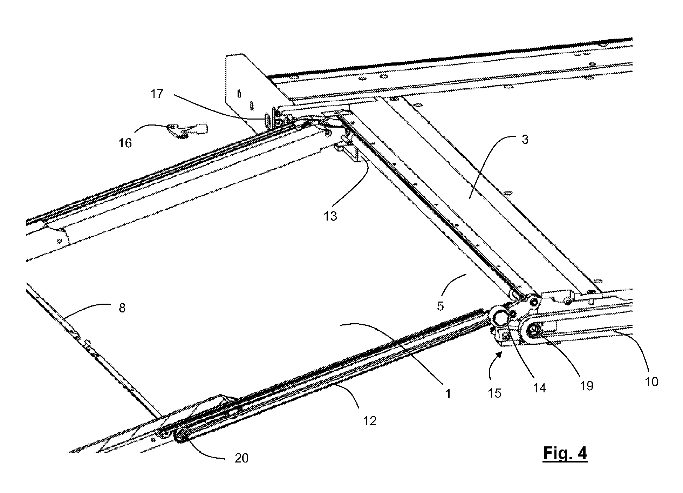

Figure 4 shows a partial view of the ramp, similar to that of Figure 3, which is also a perspective top view, but on a slightly enlarged scale;
Figure 5 illustrates a detailed perspective bottom view on a larger scale of pivoting means for compensating the rotational movement of the upper platform on its rear edge;
Figure 6 is a view similar to that of Figure 3, but with the ramp completely assembled; and
Figure 7 is a detailed view of the side coupling of the two platforms with the ramp completely assembled.

### Detailed Description of the Drawings

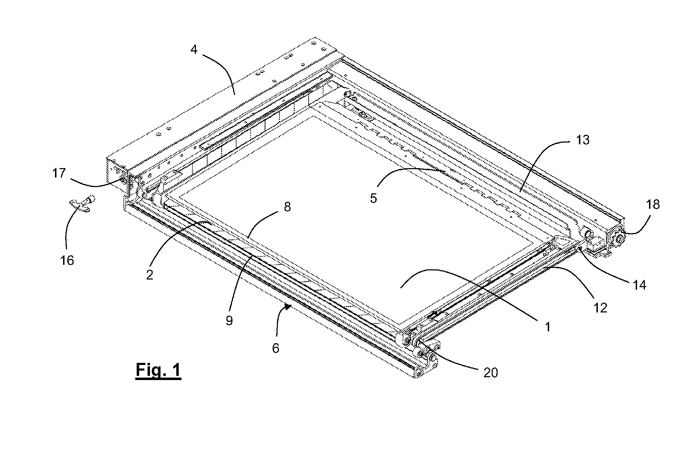

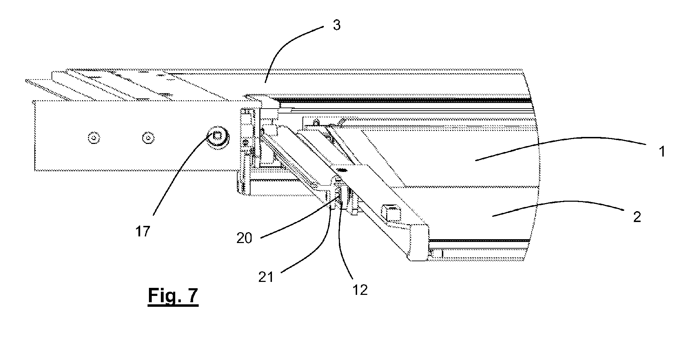

In said drawings it can be seen that the ramp object of the invention is essentially formed by an upper platform 1 and a lower platform 2, which are laterally and telescopically coupled by means of an assembly of guides 21 and bearings (see detail of Figure 7) and introduced, in the rest position of the ramp, in a box 3 suitably for being arranged integral with the floor of the vehicle, as can be seen in Figure 1. In said rest position of the ramp, the lower platform 2 is juxtaposed contiguous to the upper platform 1 and under it, both platforms are introduced, as has already been mentioned, inside the box 3 and the upper base 4 of the box 3 forms part of the actual floor of the vehicle and is preferably flush therewith.

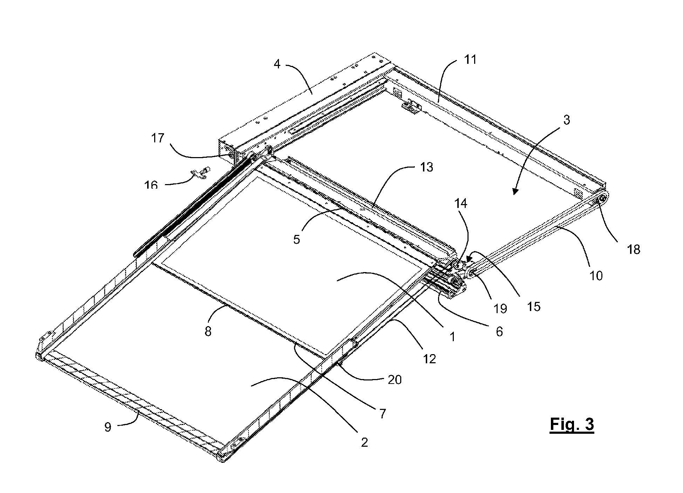

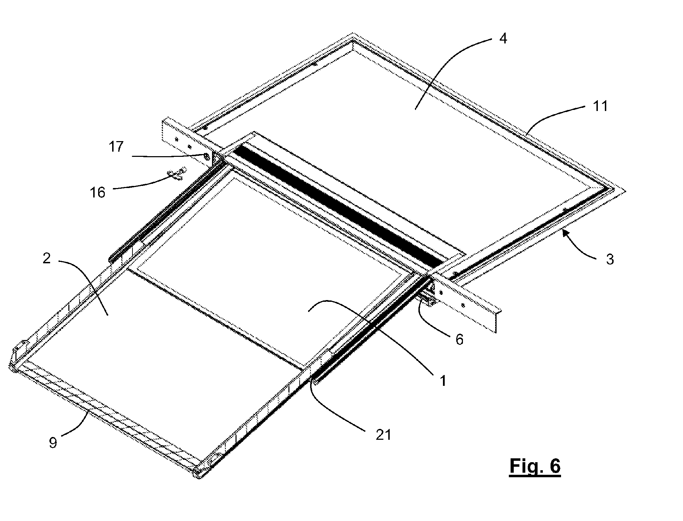

From the folded rest position, the ramp can be unfolded and adopt a second operative position, in which both platforms 1 and 2 protrude from the box 3 at the outer edge 6 of the latter and extend one after the other, forming a slanted plane from the floor of the vehicle to the ground on which the vehicle is located. In this second position, depicted in Figures 3 and 6, the upper platform 1 rests in an articulated manner at the ends of its rear edge 5 on the side guides of the box 3, in the door of the vehicle in which the ramp is assembled, and the lower platform 2 is coplanar with the upper one and has its front edge 9 resting on the ground, not depicted.

To perform the alternate unfolding and folding of both platforms 1 and 2, the ramp is provided with drive means longitudinally arranged in the sides of the platforms 1 and 2.

In the depicted embodiment, such drive means comprise in each side of the box 3 a first drive chain 10 circulating around two shafts fixed to the box 3 and provided with respective pulleys 18 and 19. Each chain 10 is linked to a drive bridge 13, integral with the lower face of the upper platform 1. As can be seen in Figure 1, in which said first drive chain 10 has been eliminated for the sake of clearer interpretation of the drawings, the drive means are provided in each side of the first platform 1 with a second drive chain 12, circulating around two shafts fixed to the platform 1 and provided with respective pulleys 14 and 20, said second chain 12 being fixed at one of its points to a point of the box 3 and at another of its points to a point of the lower platform 2. Said second chain 12 is preferably formed by a cable inextensible under traction.

The drive means are preferably provided with a single drive motor, not depicted, engageable with the pulleys 18 of the first drive chain 10 through a clutch, which is known and not depicted in the drawings, operable by means of the key 16 which is introduced in the hole 17.

Upon starting the motor when the platforms 1 and 2 are withdrawn inside the box 3 in their rest position, both platforms 1 and 2 simultaneously start exiting outside the box 3, the upper platform 1 being displaced on the sides of the box 3, by means of a known and non-depicted system of guides and wheels, and the lower platform 2 being displaced on the sides of the upper platform 1, also by means of a known system of guides and wheels partially depicted in Figure 7, which shows a track 21 over which the rear pulley 14 and the front pulley 20 of the second chain 12 move, causing the movement of the lower platform 2. The motor stops when the two platforms 1 and 2 also simultaneously reach their respective positions of maximum extension (Figures 3 and 6) and, when the ramp is to be returned to its initial position, the drive chains rotate in a reverse direction to that of the operation of extension.

It must be emphasized that the lower platform 2 is always displaced at twice the speed of the upper platform 1, due to the described particular configuration of the drive means.

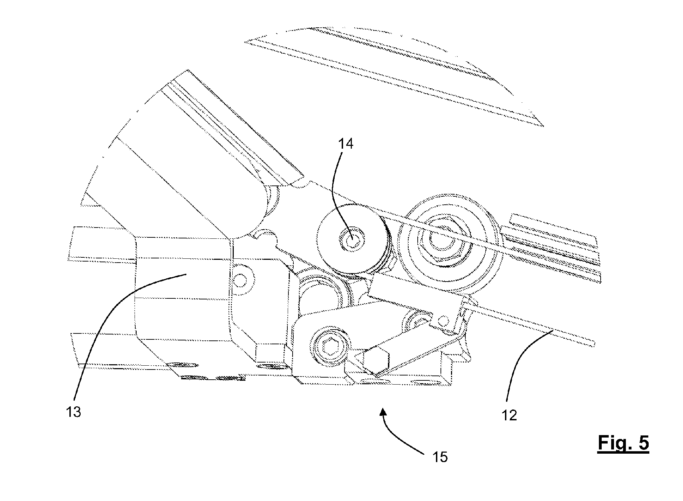

To facilitate the articulated rotation of the rear edge 5 of the upper platform 1 when the latter is displaced towards the outside of the box 3, and particularly when it gradually reaches the position of Figure 3, the drive bridge 13 is provided at both ends with respective pivoting means 15 (Figure 5) that facilitates said rotation.

## Claims

1. A concealable ramp for access to vehicles, particularly to public transport vehicles, suitable for being assembled in the floor of a door of a vehicle and capable of adopting two end positions, a first rest position, in which the ramp is folded in the vehicle, and a second operative position, in which the ramp is extended in a slanted plane from the floor of the vehicle to the surface of the ground on which the vehicle is located, **characterized in that** the ramp is formed by two platforms (1, 2) which are laterally and telescopically coupled by means of an assembly of guides and bearings and which are superimposed inside a box (3) integral with the floor of the vehicle in the first rest position, such that the upper base (4) of the box forms part of the floor itself, while in the second operative position both platforms protrude from the box in a slanted plane outside the vehicle and the upper platform (1) rests, in an articulated manner, at the ends of its rear edge (5) on the side guides of the box, in the door of the vehicle in which the ramp is assembled, whereas the lower platform (2) is arranged in a coplanar manner with respect to the upper platform, with its rear edge (7) juxtaposed to the front edge (8) of the upper platform and with its front edge (9) resting on the ground, the assembly of both platforms being provided with drive means longitudinally arranged in the platforms and suitable for providing them with respective alternate folding and unfolding movements.

2. The concealable ramp according to claim 1, **characterized in that** the drive means comprise at least one first drive chain (10), assembled in a frame integral with the box (3) of the ramp and associated with the upper platform (1); at least one second drive chain (12), associated with the lower platform (2) and with the upper platform; and a single drive motor capable of operating the first drive chain, all of this arranged such that, when the two platforms of the ramp are introduced in the box in the rest position of the ramp, upon starting the drive motor both platforms come out of the box simultaneously, the lower one being displaced at twice the speed of the upper one until both of them reach their position of outward maximum extension from the box, such that both platforms are arranged in a coplanar manner upon reaching said point of maximum extension.

3. The concealable ramp according to claims 1 and 2, **characterized in that** the first drive chain (10) is linked to a drive bridge (13), integral with the upper platform (1), and to the shaft (14) of the rear pulley of the second drive chain (12).

4. The concealable ramp according to claims 1 to 3, **characterized in that** the second drive chain (12) is fixed at one of its points to a point of the box (3) of the ramp and at another of its points to a point of the lower platform (2).

5. The concealable ramp according to any one of the previous claims, **characterized in that** the second drive chain (12) is formed by a cable inextensible under traction.
